# EUROPÄISCHE PATENTANMELDUNG

(11) **EP 1 092 944 A2**
(43) Veröffentlichungstag der Anmeldung: **18.04.2001**
(21) Anmeldenummer: 00121932.8
(22) Anmeldetag: 09.10.2000
(51) Int. Cl.: G01B 11/00

(54) **Vorrichtung zur Feinpositionierung eines Bauteils und Koordinaten-Messmaschine mit einer Vorrichtung zur Feinpositionierung eines Bauteils**

(30) Priorität: 11.10.1999 DE 19949044
(71) Anmelder: Leica Microsystems Wetzlar GmbH, 35578 Wetzlar (DE)
(72) Erfinder: Kaczynski, Ulrich, 61231 Bad Nauheim (DE)
(74) Vertreter: Reichert, Werner F., Dr.

(57) **Zusammenfassung**

Eine Vorrichtung zur Feinpositionierung eines Bauteils (18) weist ein symmetrisches, einstückiges Doppelparallelfeder-Element (1) mit einem an Biegestellen (10) aufgehängten, beweglichen Mittelbalken (6) auf, der das Bauteil trägt. Der Mittelbalken (6) ist mittels eines elastischen Elements (11) in Richtung des Rahmens (3) vorgespannt. Mit einem zwischen dem Mittelbalken (6) und dem Rahmen (3) angeordneten Feinstell-Element (11) ist der Mittelbalken (6) fast ideal verkippungsfrei verstellbar. Ein hochgenaues Koordinaten-Messgerät mit einem Messtisch (31) zur Aufnahme eines zu vermessenden Substrats (35), einer Auflicht- und/oder Durchlicht-Beleuchtungseinrichtung (37, 40; 42, 43) und einer Abbildungsoptik mit einer vertikalen optischen Achse (38) weist eine solche Feinpositioniervorrichtung mit einem vertikal angeordnetem Doppelparallelfeder-Element (1) auf. An dessen Mittelbalken (6) ist ein Objektivhalter (17) und daran das Objektiv (18) mit einer Objektivachse (19) parallel zur Bewegungsrichtung des Mittelbalkens (6) angebracht.

## Beschreibung

Die Erfindung betrifft eine Vorrichtung zur Feinpositionierung eines Bauteils mit den Merkmalen des unabhängigen Anspruchs 1 sowie eine Koordinaten-Messmaschine mit einer Vorrichtung zur Feinpositionierung eines Bauteils mit den Merkmalen des unabhängigen Anspruchs 19.

In dem Artikel "Eine Doppelparallelfeder als Präzisionsführung" von Chr. Hoffrogge und H.-J. Rademacher (PTB-Mitteilungen 2/73, Seiten 79 - 82) wird eine Vorrichtung zur Feinpositionierung eines Bauteils mit einer einstückig gearbeiten Doppelparallelfeder beschrieben. Die Doppelparallelfeder weist einen feststehenden Rahmen und eine beweglichen, von mehreren parallelen Federn gehaltenen Mittelbalken auf. Die Kraftübertragung von einem außerhalb der Doppelparallelfeder angeordneten Spindeltrieb auf den Mittelbalken erfolgt mittels eines Koppelgliedes und eines Drahtseiles. Dadurch wird das gesamte System sehr groß. Die beschriebene Doppelparallelfeder ist insbesondere für den Betrieb in horizontaler Lage vorgesehen. Ein Betrieb in vertikaler Lage erfordert erheblichen zusätzlichen konstruktiven Aufwand in Bezug auf die Kraftübertragung und die Anbringung von schweren und damit auch großen Ausgleichsgewichten. Dadurch wird der Gesamtaufbau noch größer und schwerer. Eine Verschiebung des Mittelbalkens mit geringer Verkippung ist nur durch eine komplizierte Verteilung der wirkenden Kräfte möglich.

Die vorliegende Vorrichtung zur Feinpositionierung eines Bauteils soll isnbesondere zur Feinpositionierung eines Objektivs bei dessen Fokussierung in einer höchstgenauen Koordinaten-Messmaschine eingesetzt werden. Eine solche Koordinaten-Messmaschine weist einen x/y-Messtisch zur Aufnahme eines Substrats auf, dessen Strukturen mit Nanometer-Genauigkeit vermessen werden sollen. Über dem x/y-Messtisch ist das Objektiv mit der nachfolgenden Abbildungsoptik angeordnet. Nach jeder Änderung der Messtischposition, z.B. beim Anfahren einer weiteren zu vermessenden Struktur, ist eine erneute Fokussierung durch Positionieren des Objektiv erforderlich, weil bereits kleine Unebenheiten der Messtisch-Oberfläche, ein geringer Keilfehler der Substrat-Oberfläche und die geringfügige Durchbiegung des üblicherweise auf drei Auflagepunkten gelagerten Substrats zu einer vertikalen Abweichung der Lage des Fokus führen.

Ein bekannte Messmethode ist, eine zu vermessende Struktur mit dem Objektiv beispielsweise optisch anzutasten und zu fokussieren. Dann wird die Position des x/y-Messtisches interferometrisch gemessen und aus der Messtischposition die Position der Struktur relativ zu einem Bezugspunkt mit Nanometergenauigkeit bestimmt. Aus verschiedenen Messungen können dann zum Beispiel Strukturbreiten oder Strukturabstände bestimmt werden.

Bei der angestrebten Genauigkeit müssen auch kleine Fehlerquellen bei der Positionsbestimmung erkannt und konstruktiv vermieden oder minimiert werden. Eine solche Fehlerquelle besteht in der Verkippung des Objektivs gegenüber der optischen Achse der Koordinaten-Meßmaschine. Diese Verkippung tritt bei der vertikalen Bewegung des Objektivs während des Fokussierens auf und führt zu einer seitlichen Ablage der Objektivachse auf dem Substrat mit den zu vermessenden Strukturen. Eine zu vermessende Struktur wird daher von einem verkippten Objektiv in einer anderen, seitlich verlagerten Position optisch angetastet als von einem unverkippten Objektiv. Diese Abweichung geht als Messfehler in das Messergebnis der Positionsbestimmung der zu vermessenden Struktur ein.

Es ist daher Aufgabe der vorliegenden Erfindung, eine Vorrichtung zur Feinpositionierung eines Bauteils zu schaffen, die eine präzisen geradlinigen Bewegungsweg des Bauteils erlaubt, der nur äußerst gering von einer Bezugsachse abweicht.

Diese Aufgabe wird gelöst mit einer Vorrichtung zur Feinpositionierung eines Bauteils mit den Merkmalen des Anspruchs 1. Die Unteransprüche geben vorteilhafte Ausgestaltungen der Erfindung an.

Eine erfindungsgemäße Vorrichtung zur vertikalen Feinpositionierung eines Bauteils weist ein Doppelparallelfeder-Element auf, welches einstückig gearbeitet ist und symmetrisch zu einer Symmetrieachse aufgebaut ist. Es besteht aus einem feststehenden Rahmen, der beispielsweise an einem Tragteil einer übergeordneten Einrichtung befestigt ist. In der Mitte des Rahmens ist ein beweglicher Mittelbalken auf der Symmetrieachse angeordnet. An dem Mittelbalken kann das zu positionierende Bauteil befestigt werden. Innerhalb des Rahmens zu beiden Seiten des Mittelbalkens sind zwei Seitenbalken beweglich angeordnet.

Im Bereich der Enden jedes Seitenbalkens sind jeweils zwei parallele, gerade Verbindungselemente angeordnet. An den Enden jedes Verbindungselementes sind Biegestellen in Form von Blattfedern ausgebildet. Das erste der beiden parallelen Verbindungselemente stellt mittels der an ihm angeformten Biegestellen eine bewegliche Verbindung zwischen dem Seitenbalken und dem Rahmen her. Das zweite parallele Verbindungselement stellt mittels der an ihm angeformten Biegestellen eine bewegliche Verbindung zwischen dem Seitenbalken und dem Mittelbalken her. Auf diese Weise ist der Mittelbalken mit vier Verbindungselementen symmetrisch mit den beiden Seitenbalken beweglich verbunden.

Der Mittelbalken ist mittels einer Feder in Richtung des Rahmens vorspannt. Dabei darf der Mittelbalken den Rahmen nicht berühren, weil durch eine solche Berührung das Doppelparallelfeder-Element in sich verspannt würde. Damit würde das Biegeverhalten der Biegestellen nachteilig verändert und der Mittelbalken aus seiner streng parallel zur der Symmetrieachse liegenden Bewegungsrichtung gebracht. Die Feder kann beispielsweise als Druckfeder oder als Zugfeder ausgebildet sein.

Zwischen einem Ende des Mittelbalkens und dem Rahmen ist ein Feinstell-Element angeordnet, mit welchem der Mittelbalken entgegen der Federkraft der Druckfeder verkippungsfrei in seiner Längsrichtung verstellbar ist. Wenn der Verstellweg des Feinstell-Elements nicht nur einstellbar, sondern auch regelbar sein soll, wird mit Vorteil das Feinstell-Element mit einem hochauflösenden Längenmeßsystem zur Messung seiner aktuellen Einstellung verbunden. Die Messwerte des Längenmesssystems werden als Regelgröße auf den Eingang einer Regelungselektronik geführt, mit deren Ausgangssignalen die Einstellungen des Feinstell-Elements geregelt werden.

Als Feinstell-Element kann eine Feinstellschraube verwendet werden, die entweder manuell oder motorisch getrieben wird. In einer besonders vorteilhaften Ausführungsform ist das Feinstell-Element als Piezo-Element ausgebildet, welches seine Länge in Abhängigkeit von der Größe einer angelegten Spannung verändert.

In der erfindungsgemäßen Vorrichtung kommt der Ausgestaltung des Doppelparallelfeder-Elements eine besondere Bedeutung zu. So muss das Doppelparallelfeder-Element einstückig aus einer Platte ausgeformt werden. Die Platte muss ausreichend dick sein, damit die Biegestellen als breite Blattfedern ausgeformt sind. Erst dadurch ist eine Verkippen des Mittelbalkens gegenüber der Symmetrieachse verhindert und das Doppelparallelfeder-Element, insbesondere auch vertikaler Anordnung, ausreichend stabil. Außerdem muss die Platte aus einem Werkstoff mit kleinem Wärmeausdehnungskoeffizienten und gutem Biegeverhalten bestehen. Durch den kleinen Wärmeausdehnungskoeffizienten ist sichergestellt, daß das Biegeverhalten des Doppelparallelfeder-Elements während des Betriebs bei kleinen Schwankungen der Umgebungstemperatur stabil bleibt. In einer vorteilhaften Ausführungsform ist das Doppelparallelfeder-Element aus einer Stahlplatte aus Ni36 hergestellt.

Bei der Herstellung ist darauf zu achten, dass der konstruktiv symmetrische Aufbau des Doppelparallelfeder-Elements nicht durch zu große Fertigungstoleranzen bei der Materialbearbeitung wie z.B. Schneiden, Fräsen und dergleichen beeinträchtigt wird. Jede auf diese Weise entstandene Asymmetrie an dem fertigen Doppelparallelfeder-Element führt zu einem asymmetrischen Biegeverhalten und einer unerwünschten Kippbewegung des Mittelbalkens und damit auch des Bauteils. Es hat sich gezeigt, daß bei der Ausformung des Doppelparallelfeder-Elements durch einen mechanischen Bearbeitungsprozess in der Regel zu viel Wärme in den Werkstoff eingebracht wird, der insbesondere an den Biegestellen innere Spannungen in dem Werkstoff verursacht und zu ungleichem Biegeverhalten der einzelnen Biegestellen führt.

Weiter hat sich gezeigt, dass bei einer elektro-erosiven Ausformung, die den Werkstoff nicht erwärmt und dadurch innere Verspannungen des Werkstoffs vermeidet, ein besseres und gleichmäßiges Biegeverhalten der Biegestellen erzielt wird. Daher sind in einer vorteilhaften Ausführungsform der erfindungsgemäßen Vorrichtung die Biegestellen des Doppelparallelfeder-Elements mit einem elektro-erosivem Verfahren ausgeformt. In einer weiteren, besonders vorteilhaften Ausführungsform der erfindungsgemäßen Vorrichtung ist das gesamte Doppelparallelfeder-Element mit einem elektro-erosivem Verfahren ausgeformt. Bei einem auf diese Weise erzielten symmetrischem Biegeverhalten der Biegestellen sind die Feder und das Feinstell-Element so angeordnet, daß die Kraftübertragung auf der Symmetrieachse des Doppelparallelfeder-Elements erfolgt. Damit ist eine kippfreie Bewegung des Mittelbalkens und damit des zu positionierenden Bauteils gewährleistet.

Falls infolge des Herstellungsprozesses Asymmetrien im Biegeverhalten der Biegestellen auftreten, wird mit Vorteil die Kraftübertragung der Feder und des Feinstell-Elementes gezielt außerhalb der Symmetrieachse vorgenommen. Durch diese asymmetrische Kraftübertragung können die Asymmetrien im Biegeverhalten ausgeglichen werden.

Die erfindungsgemäße Vorrichtung bietet den Vorteil, daß sie eine fast ideal kippfreie Bewegung des Mittelbalkens und damit des zu positionierenden Bauteils gewährleistet. Außerdem besitzt die erfindungsgemäße Vorrichtung durch das innerhalb des Rahmens angeordnete Feinstell-Element sehr kompakte Baumaße.

Es ist eine weitere Aufgabe der vorliegenden Erfindung, ein hochgenaues Messgerät mit einer Vorrichtung zur Feinpositionierung Bauteils, insbesondere eines Objektivs, zu schaffen, bei welcher der Kippwinkel der Objektivachse gegenüber der streng vertikalen optischen Achse des hochgenauen Messgeräts äußerst gering ist. Dabei ist das hochgenaue Meßgerät als ein Koordinaten-Messgerät ausgebildet.

Diese weitere Aufgabe wird gelöst mit einer Koordinaten-Messmaschine mit einer Vorrichtung zur Feinpositionierung eines Bauteils mit den Merkmalen des unabhängigen Anspruchs 19. Die Unteransprüche geben vorteilhafte Ausgestaltungen der Koordinaten-Messmaschine an.

Über dem Messtisch einer an sich bekannten hochgenauen Messgeräts zur Vermessung einees Substrats mit einer darüber angeordneten Abbildungsoptik wird die bereits beschriebene Vorrichtung zur Feinpositionierung mit dem Doppelparallelfeder-Element in vertikaler Ausrichtung angeordnet. Dazu ist über dem Messtisch ein feststehendes Tragteil vorgesehen, an dem der Rahmen des Doppelparallelfeder-Elements befestigt wird. An dem Mittelbalken des Doppelparallelfeder-Elements ist ein Objektivhalter befestigt.

Von dem Objektivhalter wird ein Objektiv getragen, das eine vertikal orientierte Objektivachse aufweist. Sie ist in einer Grundstellung parallel zur Bewegungsrichtung des Mittelbalkens ausgerichtet und fluchtet mit der optischen Achse des Koordinaten-Messgerätes. Die Regelungselektronik für den Feinstelltrieb der Doppelparallelfeder kann mit einem Autofokus-System zur automatischen Fokussierung des Objektivs zusammenwirken.

Das erfindungsgemäße Koordinaten-Messgerät besitzt den Vorteil, dass beim Feinpositionieren, d.h. Fokussieren des Objektivs nur äußerst geringe Kippwinkel der Objektivachse gegenüber der optischen Achse des Koordinaten-Messgeräts auftreten. Daher ergibt sich auf dem Substrat eine sehr geringe laterale Ablage der Objektivachse von der optischen Geräteachse. Bei einer typischen Maske beträgt , z.B. infolge ihres Keilfehlers, ihrer Durchbiegung etc., die vertikale Änderung der Fokuslage zwischen 10 und 20 µm. Dies bedeutet für das Objektiv einen Fokussierweg von ebenfalls maximal 20 µm und ergibt in dem erfindungsgemäßen Koordinaten-Messgerät eine laterale Seitenablage der Objektivachse weit unter 1 nm.

Vorteilhafte Ausführungsbeispiele der Erfindung werden nachfolgend anhand der Zeichnung näher erläutert. Es zeigen:
- ***Fig. 1:***: eine Vorrichtung zur Feinpositionierung eines Bauteils mit einem Doppelparallelfeder-Element;
- ***Fig. 2:***: Teilansicht eines hochgenauen Messgeräts mit einer Vorrichtung zur Feinpositionierung eines Objektivs;
- ***Fig. 3:***: Schnitt durch das hochgenaue Messgerät aus ***Fig. 2*** mit einer Vorrichtung zur Feinpositionierung eines Objektivs;
- ***Fig. 3a*** :: vergrößerte Detaildarstellung des mit dem Bezugszeichen "X" versehenen Kreises in **Fig. 3**;
- ***Fig. 4:***: Hochgenaues Koordinaten-Messgerät mit einer Vorrichtung zur Feinpositionierung eines Objektivs.

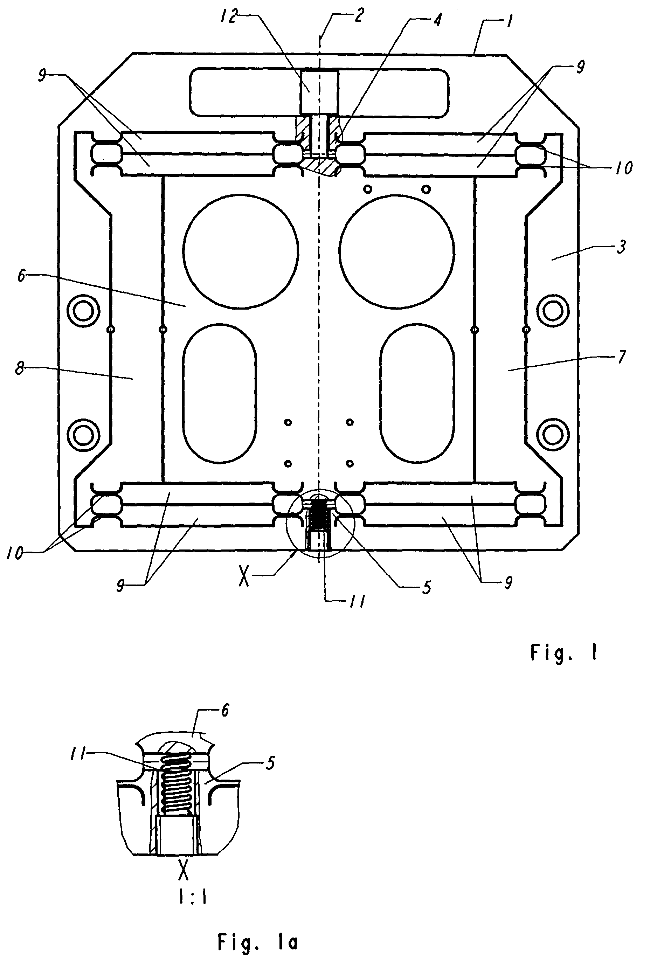

In **Fig. 1** ist eine Vorrichtung zur Feinpositionierung eines Bauteils dargestellt. Ein einstückiges Doppelparallelfeder-Element 1 mit einer Symmetrieachse 2, weist einen äußeren, feststehenden Rahmen 3 auf, an dessen Innenseite an gegenüber liegenden Positionen um die Symmetrieachse 2 zwei Halte-Elemente 4,5 ausgeformt sind. Zwischen den Halte-Elementen 4,5 ist auf der Symmetrieachse 2 ein beweglicher Mittelbalken 6 angeordnet. Zu beiden Seiten des Mittelbalkens 6 ist je ein Seitenbalken 7,8 angeordnet. Die beiden Seitenbalken 7,8 sind im wesentlichen parallel zu der Symmetrieachse 2 beweglich.

Zu beiden Seiten jedes Halte-Elements 4,5 sind Zweier-Paare von parallelen Verbindungselementen 9 ,angeordnet, die an ihren beiden Enden Biegestellen 10 aufweisen. Jeweils das erste Verbindungselement 9 verbindet einen Seitenbalken 7,8 mit einem Halte-Element 4,5. Jeweils das zweite Verbindungselement 9 verbindet denselben Seitenbalken 7,8 mit dem Mittelbalken 6. Die Verbindungselemente 9 bilden auf diese Weise die federnde Aufhängung des Mittelbalkens 6 gegenüber dem Rahmen 3 und zugleich die Führung für die Bewegung des Mittelbalkens 6, die streng in der Richtung der Symmetrieachse 2 erfolgt.

Der mit dem Bezugszeichen "X" versehene Kreis in **Fig. 1** ist in **Fig. 1a** als Detaildarstellung vergrößert dargestellt. **Fig. 1a** zeigt, daß zwischen dem am Rahmen 3 ausgeformten Halte-Element 5 und dem unteren Ende des Mittelbalkens 6 ein elastisches Element 11 angeordnet ist, durch welches der Mittelbalken 6 in Richtung des Rahmens 3 vorgespannt ist.

**Fig. 1** zeigt ein Feinstell-Element 12, das zwischen einem am Rahmen 3 ausgeformten Halte-Element 4 und dem oberen Ende des Mittelbalkens 6 angeordnet ist. Mit dem Feinstell-Element 12 wird die Bewegung des Mittelbalkens 6 erzeugt.

Wenn das Feinstell-Element 12 den Rahmen 3 und den Mittelbalken 6 entgegen der Vorspannung auseinander drückt, erfolgt diese Bewegung kontrolliert durch die federnden Biegestellen 10. Dabei wirken die beiden Seitenbalken 7,8 als Kopplung zwischen den an ihren Enden angreifenden Verbindungselementen 9. Die beiden Seitenbalken 7,8 bewegen sich dabei im wesentlichen parallel zu der Symmetrieachse 2. Sie führen jedoch zusätzlich eine kleine Bewegung in Richtung des Mittelbalkens 6 (bzw. von ihm weg) aus.

Unter dem Einfluss der Biegestellen 10, die hier idealerweise als breite Blattfedern ausgebildet sind, führt der Mittelbalken 6 eine kippfreie Bewegung entlang der Symmetrieachse 2 aus.

Um das Gewicht der erfindungsgemäßen Vorrichtung so wie wie möglich zu verringern, wurden in dem Mittelbalken 6 Ausparungen ausgeformt. Form und Lage wurden mit der Finite-Elemente-Methode optimiert, so dass dennoch eine vertikale Anordnung der Vorrichtung ohne Beeinträchtigung ihrer Stabilität möglich ist.

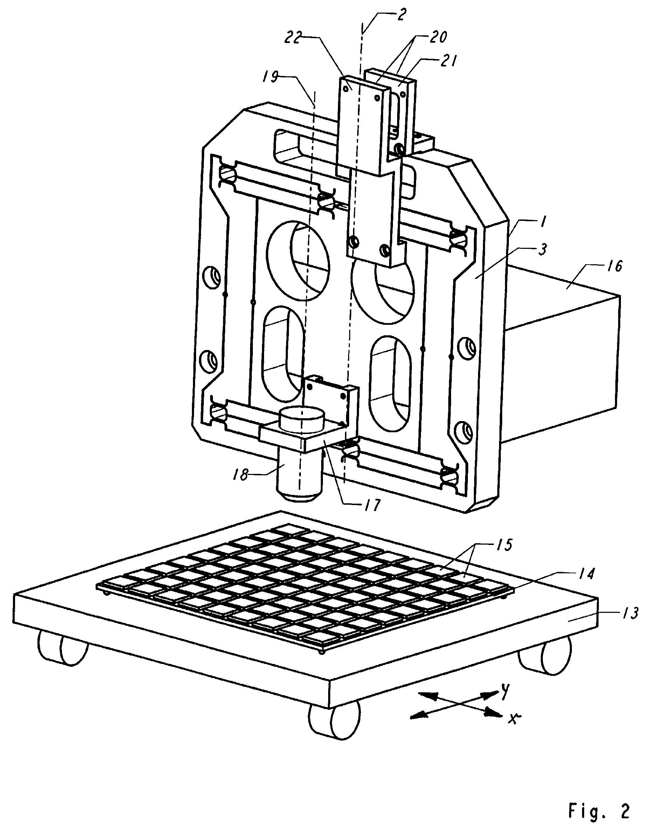

**Fig. 2** zeigt eine Teilansicht eines hochgenauen Messgeräts mit einer Vorrichtung zur Feinpositionierung eines Objektivs. Auf einem in der x- und y-Richtung verfahrbaren Messtisch 13 liegt ein Substrat 14 mit Strukturen 15. Die Positionsbestimmung des Messtisches 13 erfolgt mit einem Interferometer (nicht gezeigt). Über dem Messtisch 13 ist in vertikaler Orientierung eine Vorrichtung zur Feinpositionierung eines Bauteils angeordnet, wie sie bereits in **Fig. 1** dargestellt und beschrieben wurde. Hinter dem Doppelparallelfeder-Element 1 mit seiner Symmetrieachse 2 ist ein feststehendes Tragteil 16 dargestellt, an dem der Rahmen 3 des Doppelparallelfeder-Elements 1 befestigt ist.

Am unteren Ende des Mittelbalkens 6 ist ein Objektivhalter 17 befestigt. Dieser trägt ein Objektiv 18 mit einer Objektivachse 19, die parallel zu der Symmetrieachse 2 des Doppelparallelfeder-Elements 1 und damit parallel zu der Bewegungsrichtung des Mittelbalkens 6 ausgerichtet ist. Eine präzise, kippfrei Bewegung des Mittelbalkens 6 wird daher direkt in eine ebensolche kippfreie Bewegung des Objektivs 18 umgesetzt.

Um das Maß der Bewegung bestimmen zu können, ist im oberen Bereich des Doppelparallelfeder-Elements 1 ein hochauflösendes Längenmesssystem 20 angebracht. Es besteht aus zwei zusammenwirkenden Teilen 21,22 , von denen das eine, feststehende 21an dem feststehenden Rahmen 3 und das andere 22 an dem beweglichen Mittelbalken 6 montiert ist. Das mitbewegte Teil 22 am Mittelbalken 6 besitzt einen feingeteilten Maßstab, beispielsweise einen Glasmaßstab. Das andere, feststehende Teil 21 besitzt einen Detektor (nicht gezeigt) zur Erfassung der Relativbewegung der beiden Teile 21, 22 gegeneinander und damit der Bewegung des Mittelbalkens 6 bzw. des Objektivs 18.

Der Messwert des hochauflösenden Längenmesssystems 20 kann in einer Regelungselektronik (nicht gezeigt) , z.B. integriert in einem Autofokus-System (nicht gezeigt), zur Regelung der Bewegung des Objektivs 18 als Regelgröße verwendet werden

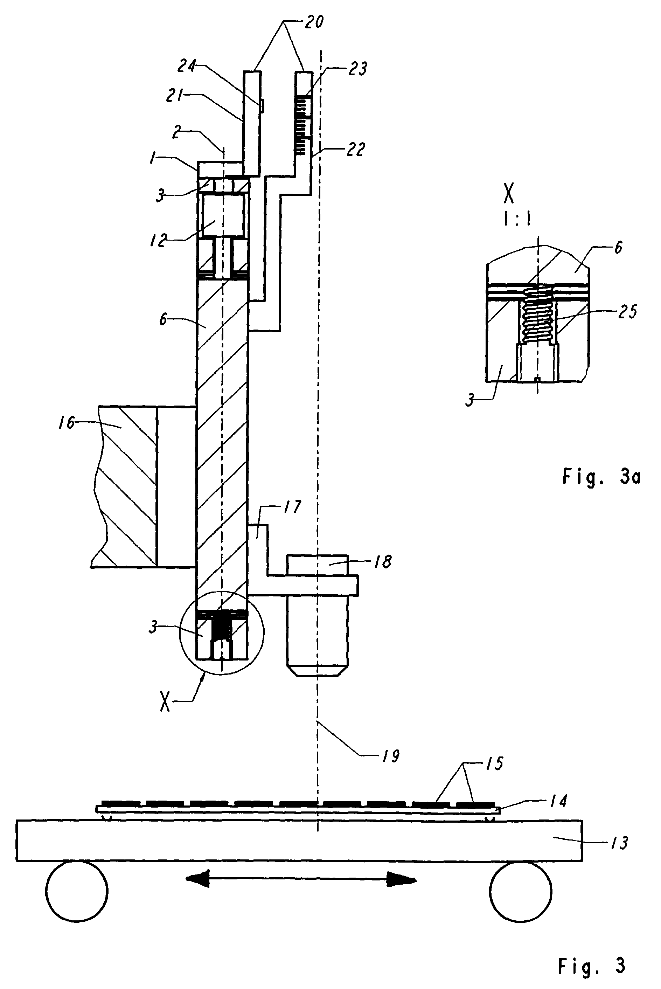

***Fig. 3*** zeigt einen Schnitt durch das hochgenaue Messgerät aus ***Fig. 2*** mit einer Vorrichtung zur Feinpositionierung eines Objektivs.

Dargestellt ist wiederum der verfahrbare Messtisch 13 mit einem aufgelegten Substrat 14 mit zu vermessenden Strukturen 15. Darüber ist das Doppelparallelfeder-Element 1 angeordnet. Es ist mit seinem Rahmen 3 an einem Tragteil 16 befestigt. Die Befestigung ist nicht dargestellt, da sie außerhalb der Schnittebene liegt. Innerhalb des Rahmens 3 ist der Mittelbalken 6 angeordnet.

Im oberen Bereich des Doppelparallelfeder-Elements 1 ist zwischen dem Rahmen 3 und dem Mittelbalken 6 ein Feinstell-Element 12 angebracht. Mit ihm wird die Bewegung des Mittelbalkens 6 eingestellt. Im oberen Bereich des Doppelparallelfeder-Elements 1 ist außerdem ein hochauflösendes Längenmesssystem 20 angebracht, wie es bereits in **Fig. 2** dargestellt ist. In dieser Darstellung ist deutlich zu erkennen, dass es aus zwei zusammenwirkenden Teilen 21, 22 besteht. Von diesen ist das eine, feststehende 21 an dem feststehenden Rahmen 3 und das andere 22 an dem beweglichen Mittelbalken 6 montiert. Das mitbewegte Teil 22 am Mittelbalken 6 besitzt einen feingeteilten Maßstab 23, beispielsweise einen Glasmaßstab. Das andere, feststehende Teil 21 besitzt einen Detektor 24 zur Erfassung der Relativbewegung der beiden Teile 21, 22 gegeneinander und damit der Bewegung des Mittelbalkens 6 bzw. des Objektivs 18.

Am unteren Ende des Mittelbalkens 6 ist ein Objektivhalter 17 befestigt. Dieser trägt ein Objektiv 18 mit einer Objektivachse 19, die parallel zu der Symmetrieachse 2 des Doppelparallelfeder-Elements 1 und damit parallel zu der Bewegungsrichtung des Mittelbalkens 6 ausgerichtet ist. Eine präzise, kippfrei Bewegung des Mittelbalkens 6 wird daher direkt in eine ebensolche kippfreie Bewegung des Objektivs 18 umgesetzt.

Das Ausgangssignal des Detektors 24 kann als Regelgröße für eine Regelungselektronik (nicht gezeigt) für den Feinstelltrieb 12 der Doppelparallelfeder 1 und damit für die Positionierung des Objektivs 18 genutzt werden. Dabei kann die Regelungselektronik mit einem Autofokus-System zur automatischen Fokussierung des Objektivs 18 zusammenwirken.

Der mit dem Bezugszeichen "X" versehene Kreis in **Fig. 3** ist in **Fig. 3a** als Detaildarstellung vergrößert dargestellt. **Fig. 3a** verdeutlicht, wie der Mittelbalken 6 an seinem unteren Ende mit einem elastischen Element, hier einer Feder 25, in Richtung des Rahmens 3 vorgespannt ist. Dabei wird ein direkter Kontakt des Mittelbalkens 6 mit dem Rahmen 3 ausgeschlossen, um ein Verkanten und Verspannen der beiden Teile zu vermeiden.

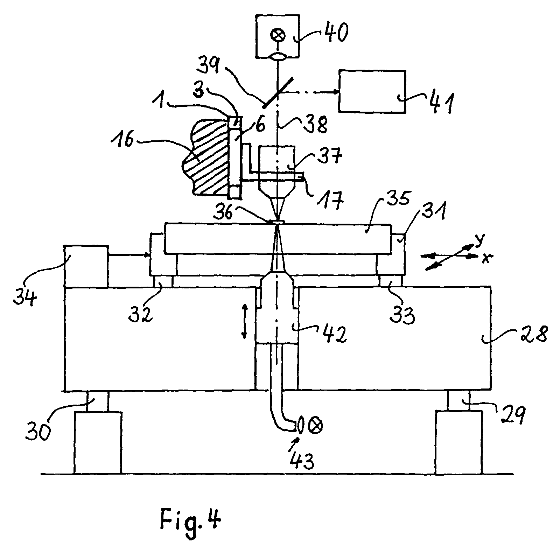

**Fig. 4** zeigt ein erfindungsgemäßes Koordinaten-Messgerät. Es besteht aus einem Granitblock 28, der auf Füßen 29, 30 schwingungsgedämpft gelagert ist. Auf dem Granitblock 28 ist ein als Rahmen ausgebildeter Messtisch 31 auf Luftlagern 32, 33 in den zwei durch Pfeile angedeuteten Richtungen gleitend verschiebbar. Der Rahmen des Messtisches 31 besteht vorteilhafterweise aus einem Material mit geringem thermischen Ausdehnungskoeffizienten, beispielsweise einer Glaskeramik. Die Antriebe dafür sind nicht dargestellt.

Die Position des Messtisches 31 wird mit einem Laser-Interferometer-System 34 in x- und y-Richtung gemessen.

In den Rahmen des Messtisches 31 ist eine Maske 35 eingelegt. Die Maske 35 besteht z.B. aus Quarzglas. Auf der Maskenoberfläche sind Strukturen 36 aufgebracht. Da der Meßtisch 31 als Rahmen ausgebildet ist, kann die Maske 35 auch von unten her durchleuchtet werden.

Oberhalb der Maske 35 befindet sich ein Abbildungssystem mit einem Objektiv 37 hoher optischer Güte, das zur Fokussierung längs seiner optischen Achse 38 in z-Richtung verstellbar ist. Über einen Teilerspiegel 39 wird zum einen das Licht einer Lichtquelle 40 in den optischen Strahlengang eingeleitet und zum anderen werden die Abbildungsstrahlen auf eine Detektor-Einrichtung 41 gelenkt. Die Detektor-Einrichtung 41 ist z.B. eine CCD-Kamera mit hochauflösendem Pixelarray. Die Lichtquelle 40 emittiert im nahen UV-Spektralbereich.

In den Granitblock 28 ist eine weitere Beleuchtungseinrichtung eingesetzt, die aus einem höhenverstellbaren Kondensor 42 und einer Lichtquelle 43 besteht. Als Lichtquelle 43 kann auch die Austrittsfläche eines Lichtleiters vorgesehen sein. Die optische Achse des Kondensors 42 fluchtet mit der optischen Achse 38 des Objektivs 37. Die Höhenverstellung des Kondensors 42 mit Lichtquelle 43 dient der Anpassung der auf die Struktur 36 zu richtenden Beleuchtungsstrahlen an unterschiedliche optische Dicken von Masken 35. Der Kondensorkopf kann insbesondere in den offenen Teil des Messtischrahmens hineinreichen. Zum Schutz vor Beschädigungen bei Tischverschiebungen über die gesamte Maskenfläche kann er aber auch unter die Oberfläche des Granitblocks gezogen werden. Die Lichtquellen 40 und 43 sind voneinander unabhängig einschaltbar.

Über dem Messtisch 32 wird die bereits beschriebene Doppelparallelfeder 1 in vertikaler Ausrichtung angeordnet. Dazu ist über dem Messtisch 31 ein Tragteil 16 vorgesehen, an dem der Rahmen 3 der Doppelparallelfeder 1 befestigt wird. An dem Mittelbalken 6 der Doppelparallelfeder 1 ist ein Objektivhalter 17 befestigt.

Von dem Objektivhalter 17 wird das Objektiv 37 getragen. Sein optische Achse ist in einer Grundstellung parallel zur Bewegungsrichtung des Mittelbalkens 6 ausgerichtet und fluchtet mit der optischen Achse des Koordinaten-Messgerätes.

Die vorliegende Erfindung ist in Bezug auf Ausführungsbeispiele beschrieben worden, es jedoch für jeden auf diesem Fachgebiet tätigen Fachmann offensichtlich, dass Änderungen und Abwandlungen vorgenommen werden können, ohne dabei den Schutzbereich der nachstehenden Ansprüche zu verlassen.

### Bezugszeichenliste

- 1: Doppelparallelfeder-Element
- 2: Symmetrieachse
- 3: Rahmen
- 4: Halte-Element
- 5: Halte-Element
- 6: Mittelbalken
- 7: Seitenbalken
- 8: Seitenbalken
- 9: Verbindungselemente
- 10: Biegestellen
- 11: elastisches Element
- 12: Feinstell-Element
- 13: Messtisch
- 14: Substrat
- 15: Strukturen
- 16: Tragteil
- 17: Objektivhalter
- 18: Objektiv
- 19: Objektivachse
- 20: Längenmesssystem
- 21: feststehendes Teil
- 22: mitbewegtes Teil
- 23: Maßstab
- 24: Detektor
- 25: Feder
- 28: Granitblock
- 29: Fuß
- 30: Fuß
- 31: Messtisch
- 32: Luftlager
- 33: Luftlager
- 34: Laser Interferometer-System
- 35: Maske
- 39: Teilerspiegel
- 40: Lichtquelle
- 41: Detektor-Einheit
- 42: Kondensor
- 43: Lichtquelle

## Patentansprüche

1. Eine Vorrichtung zur Feinpositionierung eines Bauteils umfasst:
a) ein einstückiges Doppelparallelfeder-Element (1) mit einer Symmetrieachse (2), bestehend aus
i) einem äußeren, feststehenden Rahmen (3), an dessen Innenseite um die Symmetrieachse (2) an gegenüber liegenden Positionen zwei Halte-Elemente (4, 5) ausgeformt sind,
ii) einem zwischen den Halte-Elementen (4, 5) beweglichen Mittelbalken (6),
iii) zwei beidseits des Mittelbalkens (6) angeordneten beweglichen Seitenbalken (7, 8),
iv) und beidseits jedes Halte-Elements (4, 5) angeordneten Zweier-Paaren von parallelen, an den Enden mit Biegestellen (10) versehenen Verbindungselementen (9), wobei jeweils das erste Verbindungselement (9) mit einem Seitenbalken (7, 8) und einem Halte-Element (4, 5) verbunden ist und wobei jeweils das zweite Verbindungselement (9) mit dem Seitenbalken (7, 8) und dem Mittelbalken (6) verbunden ist,
b) ein elastisches Element (11) zwischen einem Halte-Element (4, 5) und einem Ende des Mittelbalkens (6)
c) und ein Feinstell-Element (12), das zwischen einem Halte-Element (4, 5) und einem Ende des Mittelbalkens (6) angeordnet ist.

2. Vorrichtung nach Anspruch 1,
**dadurch gekennzeichnet,**
dass die Biegestellen (10) oder das ganze Doppelparallelfeder-Element (1) mit einem elektro-erosivem Verfahren ausgeformt sind, so dass sie spannungsfrei ausgebildet sind.

3. Vorrichtung nach Anspruch 1,
**dadurch gekennzeichnet,**
dass die Biegestellen (10) als Blattfedern ausgebildet sind.

4. Vorrichtung nach Anspruch 1,
**dadurch gekennzeichnet,**
dass die Punkte der Kraftübertragung des elastischen Elements (11) und des Feinstell-Elementes (12) auf der Symmetrieachse (2) liegen.

5. Vorrichtung nach Anspruch 1,
**dadurch gekennzeichnet,**
dass der Mittelbalken (6) durch das elastische Element (11) in Richtung des Rahmens (3) vorgespannt ist.

6. Vorrichtung nach Anspruch 1,
**dadurch gekennzeichnet,**
dass an der Innenseite des Rahmens (3) gegenüber den Enden der Seitenbalken (7,8) Abstandsstücke angeformt sind.

7. Vorrichtung nach Anspruch 1,
**dadurch gekennzeichnet,**
dass dem Feinstell-Element (12) ein hochauflösendes Längenmesssystem (20) zur Messung seiner aktuellen Einstellung und eine Regelungselektronik zugeordnet sind, wobei die Messwerte des Längenmeßsystems (20) die Regelgröße für die Regelungselektronik bilden.

8. Ein Koordinaten-Messgerät zur Bestimmung der zu einem Bezugspunkt relativen Lage von Strukturen (36) auf einem transparenten Substrat (35) umfasst:
a) eine Auflicht- Beleuchtungseinrichtung (37, 40) und/oder eine Durchlicht-Beleuchtungseinrichtung (42, 43) auf einer gemeinsamen vertikalen optischen Achse ,
b) einen vertikal und relativ zur optischen Achse (38) verschiebbaren, rahmenförmigen Messtisch (4) mit interferometrischer Positionsbestimmung (34) zur Aufnahme des Substrats (35),
c) eine Abbildungs-Einrichtung mit einem zu fokussierenden Objektiv (37) zur Abbildung der Strukturen (36) des Substrats (35),
d) ein vertikal angeordnetes, einstückiges Doppelparallelfeder-Element (1) mit einer Symmetrieachse (2), bestehend aus
i) einem äußeren, feststehenden Rahmen (3), an dessen Innenseite um die Symmetrieachse (2) an gegenüber liegenden Positionen zwei Halte-Elemente (4, 5) ausgeformt sind,
ii) einem zwischen den Halte-Elementen (4, 5) beweglichen Mittelbalken (6),
iii) zwei beidseits des Mittelbalkens (6) angeordneten beweglichen Seitenbalken (7, 8),
iv) und beidseits jedes Halte-Elements (4, 5) angeordneten Zweier-Paaren von parallelen, an den Enden mit Biegestellen (10) versehenen Verbindungselementen (9), wobei jeweils das erste Verbindungselement (9) mit einem Seitenbalken (7, 8) und einem Halte-Element (4, 5) verbunden ist und wobei jeweils das zweite Verbindungselement (9) mit demselben Seitenbalken (7, 8) und dem Mittelbalken (6) verbunden ist,
e) ein elastisches Element (11) zwischen einem Halte-Element (4,5) und einem Ende des Mittelbalkens (6),
f) ein Feinstell-Element (12), das zwischen einem Halte-Element (4, 5) und einem Ende des Mittelbalkens (6)
g) und einen an dem Mittelbalken (6) befestigten Objektivhalter (17) zur Aufnahme des Objektivs (18).

9. Koordinaten-Messgerät nach Anspruch 8
**dadurch gekennzeichnet,**
dass dem Feinstell-Element (12) ein hochauflösendes Längenmesssystem
(20) zur Messung seiner aktuellen Einstellung und eine Regelungselektronik
zugeordnet sind, wobei die Messwerte des Längenmesssystems (20) die Regelgröße für die Regelungselektronik bilden.

10. Koordinaten-Messgerät nach Anspruch 8,
**dadurch gekennzeichnet,**
dass die Regelungselektronik mit einem Autofokus-System zur automatischen Fokussierung des Objektivs (18) zusammenwirkt.
